Europäisches Patentamt

European Patent Office

Office européen des brevets

(11) Publication number: **0 150 583**
A2

# EUROPEAN PATENT APPLICATION

(21) Application number: **84308341.1**

(22) Date of filing: **30.11.84**

(51) Int. Cl.⁴: **B 60 K 41/22**
// F16H3/08

(30) Priority: **05.12.83 IL 70382**

(43) Date of publication of application: **07.08.85**
Bulletin 85/32

(84) Designated Contracting States: **AT BE CH DE FR GB IT LI LU NL SE**

(71) Applicant: **INDUSTRIES DEVELOPMENT CORPORATION (INTERNATIONAL SERVICES) CO. LTD., 4 Chopin Street, IL-Jerusalem (IL)**

(72) Inventor: **Baruch, Oswald, Givat Amos Tzahal Street 21/10, Nesher Haifa (IL)**

(74) Representative: **Brown, John David et al, FORRESTER & BOEHMERT Widenmayerstrasse 4/I, D-8000 München 22 (DE)**

(54) **Automatic gear box.**

(57) A vehicle drive system comprises an engine (10), transmission means interposed between the engine (10) and the drive wheels of a vehicle, the transmission means comprising an input shaft (18), an output shaft (31) and a plurality of selectable ratio gear couplings between the input shaft and the output shaft, a clutch (16) interposed between the engine and the input shaft (18), the clutch being operable selectively to engage and disengage the engine from the input shaft, a clutch actuator (17), first and second synchromesh mechanisms (30, 40), first and second mechanical linkage elements, and control means (50) operative to position the synchromesh mechanisms such that the shifts between the selectable ratio gear couplings are carried out in a minimum amount of time.

AUTOMATIC GEAR BOX

## FIELD OF THE INVENTION

The present invention relates to transmissions generally and more particularly to apparatus for automating a mechanical gear box for motor vehicles.

## BACKGROUND OF THE INVENTION

There are known in the literature various types of apparatus for automating the gear changes in a mechanical gear box. One such system is described in Automotive Engineering, pgs. 80-82, Feb. 1983. This gearbox is essentially a standard gearbox with altered axial alignment of the gears so odd and even numbered ones are grouped on independent coaxial primary shafts. The gears are pre-shifted and there is a separate clutch for each primary shaft. The principle disadvantage of the device described in Automotive Engineering is that two clutches are required and control means must be provided to actuate both clutches. The requirement for two clutches increases the cost, complexity and size of the gearbox.

## SUMMARY OF THE INVENTION

The present invention provides apparatus for automating gear changes in a mechanical gear box which overcomes the above indicated disadvantages of the prior art apparatus of this type.

There is thus provided in accordance with an embodiment of the present invention in association with a conventional gear box having conventional gears , transmission shafts and synchronizing apparatus for selectable engagement of the gears to the transmission shafts, and a vehicle engine, apparatus for providing automatic gear change control including, a clutch selectably coupling the gear box to the engine, a clutch actuator governing operation of the clutch, first and second piston actuated apparatus for providing selectable engagement or disengagement of a gear pair via the synchronizing apparatus, mechanical linkage apparatus associated with the first and second piston actuated apparatus for providing predetermined gear disengagements in response to predetermined orientations of the first and second piston actuated apparatus for effecting desired gear changes, the mechanical linkage apparatus being operative upon engagement of a desired gear to cause disengagement of the previously engaged gear so as to minimize the time during which no gear is connected during a gear change.

Further in accordance with a preferred embodiment of the present present invention, the mechanical linkage apparatus comprises first and second mechancial linkages.

## BRIEF DESCRIPTION OF THE DRAWINGS

The present invention will be understood and appreciated more fully from the following detailed description taken in conjunction with the drawings as follows:

Fig. 1 is a block diagram illustration of automatic gear shift apparatus constructed and operative in accordance with a prefered embodiment of the present invention;

Fig. 2 is a detailed schematic illustration of piston actuated apparatus forming part of the apparatus of Fig. 1;

Fig. 3 is a diagramatic illustration of the apparatus of Fig. 1;

Fig. 4 is a diagramatic illustration of a portion of the apparatus of Fig. 1 showing a first mechanical linkage and a second mechanical linkage associated with the piston actuated apparatus when the apparatus is arranged for operation in neutral.

Fig. 5 is a diagramatic illustration corresponding to the illustration of Fig. 4 when the apparatus is arranged for first gear operation;

Fig. 6 is a diagramatic illustration corresponding to the illustration of Fig. 4 when the apparatus is arranged for second gear operation;

Fig. 7 is a diagramatic illustration corresponding to the illustration of Fig. 4 when the apparatus is arranged for third gear operation;

Fig. 8 is a timing diagram illustrating clutch engagement during a gear change.

Fig. 9 is a diagramatic illustration of a portion of the apparatus of Fig. 1 when the apparatus is arranged for operation in reverse;

Fig. 10 is a diagramatic illustration corresponding to Fig. 9 showing the mechanical interlock system used to prevent operation in reverse when the transmission is in gear.

DETAILED DESCRIPTION OF THE INVENTION

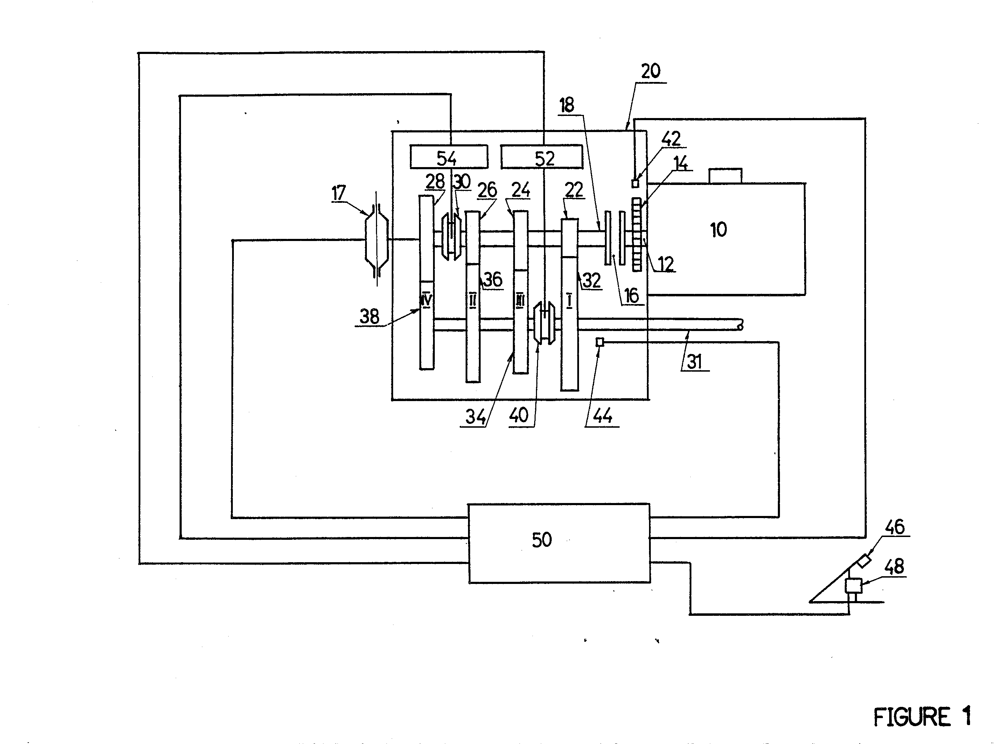

Reference is now made to Fig. 1 which illustrates the automatic gear change system of the present invention in block diagram form. An engine 10, such as a conventional heat engine of the spark ignition or compression ignition type, provides a rotary power output via an output shaft 12 onto which is fixedly mounted a flywheel 14. A clutch 16, operated by a clutch actuator 17, couples output shaft 12 to a transmission input shaft 18 forming part of a conventional four speed mechanical gearbox 20. Clutch actuator 17 may be of the conventional type as described in the August 1983 edition of Automotive Engineering, pages 35-38, published by the Society of Automotive Engineers. The clutch actuator 17 will engage and disengage the clutch 16 upon command of control apparatus 50.

Fixedly mounted on transmission input shaft 18 are input gears 22 and 24. Additional input gears 26 and 28 are rotatably mounted onto transmission input shaft 18 and selectively coupled thereto by a conventional synchromesh mechanism 30. Synchromesh mechanism 30 is described in the Institution of Mechanical Engineers, Proceedings 1969-70, volume 184, part 31, Conference on Drive Line Engineering, book 1, paper no. 25.

Mounted onto transmission output shaft 31 and meshing with respective input gears 22, 24, 26 and 28 are respective output gears 32, 34, 36 and 38.

Gears 32 and 34 are rotatably mounted onto transmission output shaft 31 and selectably coupled thereto by a conventional sychromesh mechanism 40, which may be similar to synchromesh mechanism 30. Gears 36 and 38 are fixed onto transmission output shaft 31.

The speed of engine 10 is sensed by a conventional speed sensor 42 which is located in proximity to flywheel 14. The vehicle speed is sensed by a conventional speed sensor 44 which is located in proximity to the transmission output shaft 31. The position of operator controllable accelerator pedal 46 is sensed by a conventional position sensor 48.

Control apparatus 50, such as a conventional microprocessor based control system, receives output signals from sensors 42, 44 and 48 and provides control signals in turn to clutch actuator 17 and to first and second piston actuated synchromesh mechanism control devices 52 and 54, which are operative to control the operation of synchromesh mechanisms 30 and 40 respectively. Control apparatus 50 is operative to effect gear changes so as to optimize fuel economy and vehicle performance is accordance with predetermined criteria.

In the operation of the apparatus of Fig. 1 in first gear, the engine power is transmitted via gears 22 and 32. In second gear operation, the engine power is transmitted via gears 26 and 36. In third gear operation, engine power is transmitted via gears 24 and 34 while in fourth gear operation, engine power is transmitted via gears 28 and 38. In first and third gear operations, synchromesh mechanism 30 is in neutral position so that neither gear 26 or 28 is coupled to the transmission input shaft 18. In second and fourth gear operation, synchromesh mechanism 40 is in a neutral position so that neither gear 32 nor gear 34 is coupled to the transmission output shaft 31.

It is appreciated that the mechanical gearbox 20 may be any suitable conventional gearbox and may have a number of available gear ratios and may have any suitable layout, depending on the type of vehicle it is to drive. For example, the layout of the gears may be equivalent to the well known "H" arrangement of conventional gearboxes wherein the first and second gears are associated with the same synchromesh mechanism and and the third and fourth gears are associated with the same synchromesh mechanism. It will also be appreciated that mechanical gearbox 20 may be a five speed transmission.

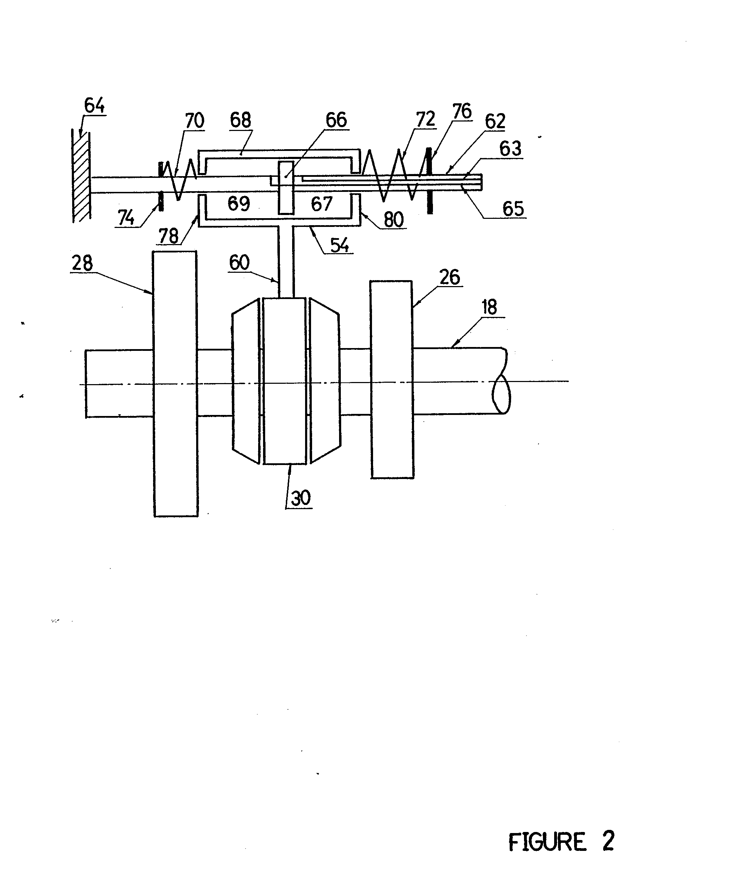

Reference is now made to Fig. 2 which illustrates a piston actuated synchromesh control mechanism such as devices 52 and 54 illustrated in block diagram form in Fig. 1. Fig. 2 illustrates the transmission input shaft 18 and gears 26 and 28, as well as the synchromesh mechanism 30 which produces selectably engagement of up to one of the gears 26 and 28 with the transmission input shaft 18 at any given time.

As noted above, synchromesh mechanism 30 is a conventional synchromesh mechanism and is operative to slide axially along the axis of transmission input shaft 18 into mechanical enagagement with one of the gears 26 or 28 for coupling thereof onto the transmission input shaft 18. Alternatively, synchromesh mechanism 30 may be located intermediate the two gears in a neutral position whereby both gears 26 and 28 are disengaged from rotation with shaft 18.

The axial orientation of synchromesh mechanism 30 is determined by the position of fork 60 which engages the synchromesh mechanism. The fork is attached to, or represents and extension of the synchromesh mechanism control device 54. The synchromesh mechanism control device comprises a shaft 62 which is rigidly fixed to the wall 64 of the gearbox or to any fixed element with respect to which the synchromesh mechanism is axially moveable along the longitudinal axis of the shaft 18. Shaft 62 is formed with a piston 66 mounted thereon.

Disposed in sealed, slideable, surrounding relationship with respect to shaft 62 and about piston 66 is a synchro drive piston 68 which is attached to fork 60 so that if the synchro drive piston 68 is moved in the longitudinal direction along shaft 18, the fork 60 will move together with the synchro drive piston 68. Shaft 62 is formed with fluid communications conduit 63 so that oil may be forced into the right hand chamber 67 and fluid communication conduit 65 so that fluid may be forced into the left hand chamber 69. Return springs 70 and 72 are provided about shaft 62 and are seated on respective spring seats 74 and 76 fixed with respect to shaft 62 and on respective opposite end surfaces 78 and 80 of the synchro drive piston 68, for biasing the housing towards its neutral position, out of engagement with either of the gears 26 and 28. Alternatively, appropriate hydraulic and piston means could be employed to return the synchro drive piston 68 to its neutral position when there is no oil pressure in chambers 67 or 69.

The operation of the apparatus of Fig. 2 may be seen to be responsive to differential fluid pressure in the synchro drive piston 68. When the differential fluid pressure in either chambers 67 or 69 overcomes the force of the relevant bias spring 70 or 72, the synchro drive piston 68 moves axially along shaft 62 and causes fork 60 to move the synchromesh mechanism 30 in a corresponding direction into engagement with one of the gears 26 and 28. When the differential fluid pressure falls below the force needed to overcome the bias spring, or if it is reversed, return motion of the synchromesh mechanism 30 is produced, causing disengagement with the gear. Thus it may be appreciated that the apparatus of Fig. 2 is a fluid responsive synchromesh mechanism drive device and may operate on any suitable fluid, such as pressurized air, air below atmospheric pressure as provided from the intake manifold of engine 10, or hydraulic fluid.

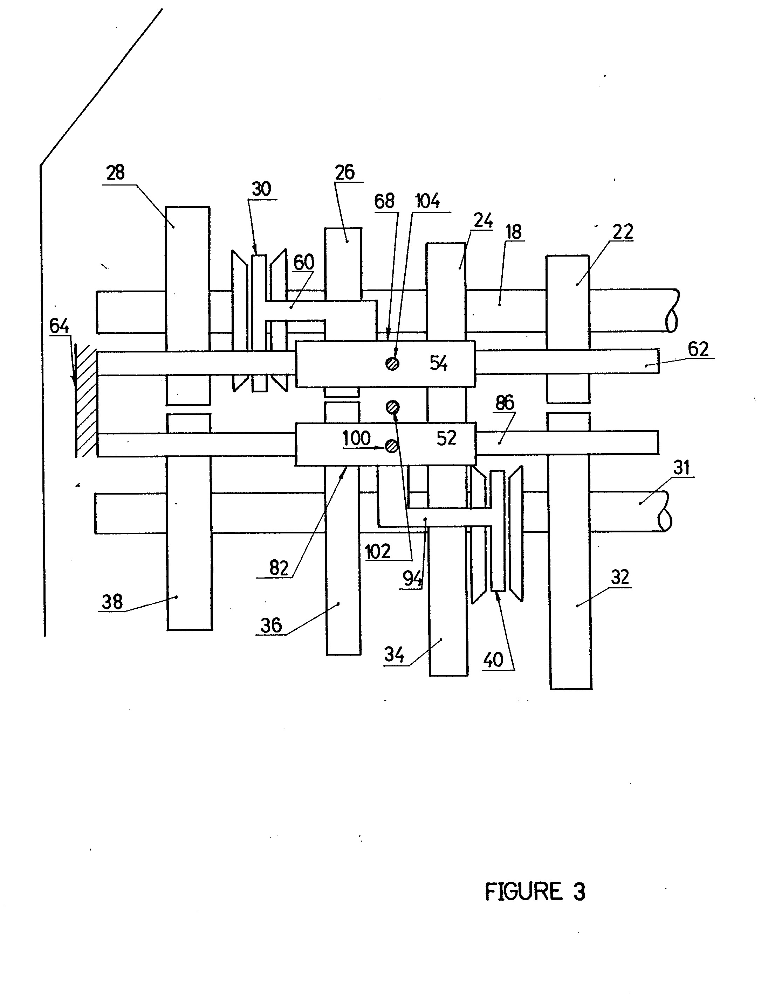

Reference is now made to Fig. 3 which illustrates the apparatus of Fig. 1 in somewhat enhanced detail and indicates the relationship between the synchromesh mechanism control devices 52 and 54 described hereinabove in connection with Fig. 2 and the remainder of the transmission described earlier in connection with Fig. 1.

In the illustration of Fig. 3, synchro drive pistons 68 and 82 are shown arranged for axial movement along respective shafts 62 and 86. Synchro drive pistons 68 and 82 are connected by forks 60 and 94 associated with respective synchromesh mechanisms 30 and 40.

When synchro drive piston 82 moves to the right, as shown in Fig. 3, along shaft 86, fork 94 forces synchromesh mechanism 40 to engage gear 32 to shaft 31 for first gear operation. When synchro drive piston 82 moves to the left along shaft 86, fork 94 forces synchromesh mechanism 40 to engage gear 34 to shaft 32 for third gear operation. When synchro drive piston 68 moves to the right, as shown in Fig. 3, along shaft 62, fork 60 forces synchromesh mechanism 30 to engage gear 26 to shaft 18 for second gear operation. When synchro drive piston 68 moves to the left along shaft 62, fork 60 forces synchromesh mechanism 30 to engage gear 28 to shaft 18 for fourth gear operation.

In accordance with a preferred embodiment of the invention, a pin 100 is fixedly attached to synchro drive piston 82, a pin 102 is fixedly attached to the housing of the gear box 20 and is thus stationary, and a pin 104 is fixedly attached to synchro drive piston 68. The function and operation of these pins will be described hereinbelow.

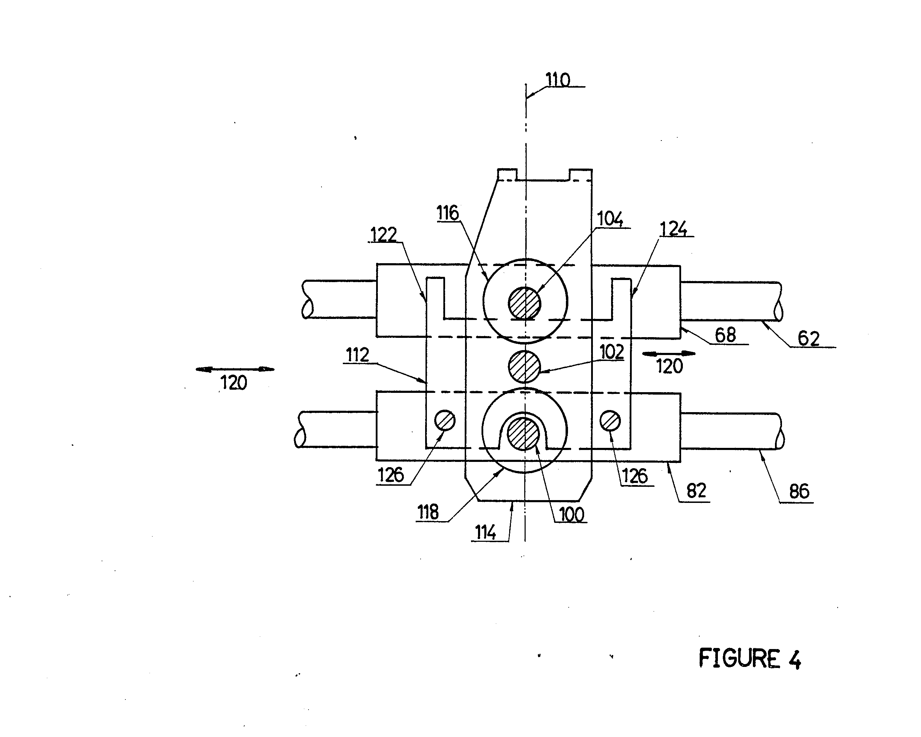

Reference is now made to Fig. 4 which illustrates synchro drive pistons 68 and 82. Pins 104, 100 and 102, fixedly attached to synchro drive pistons 68 and 82 and to the gear box 20, respectively, are also shown. The orientation illustrated in Fig. 4 corresponds to a neutral orientation in which no gear is engaged. In this orientation, all of the pins 104, 100 and 102 are seen to be oriented in a central position indicated by an imaginary center line 110.

A first mechanical linkage element 112 is fixedly attached to synchro drive piston 82 via screws 126 and can move together therewith. First mechanical linkage element 112 is a generally flat element the function of which will be explained hereinbelow.

A second mechanical linkage element 114 is pivotally mounted about pin 102, which, as noted above, is fixedly mounted onto the housing of gearbox 20. Second mechanical linkage element 114 is a generally flat element and is provided with first and second apertures 116 and 118 located on opposite sides of its pivot location corresponding to pin 102, which apertures accomodate respective pins 104 and 100. The engagement of pins 100 and 104 with apertures 116 and 118 in element 114 is such that with an amount of lost motion defined by the size and configuration of the apertures, which here are circular, movement of either of the synchro drive pistons 68 or 82 in an axial direction, indicated by arrows 120, by an amount which exceeds the lost motion provided by the apertures, causes movement of the other synchro drive piston in the opposite axial direction due to rotation of linkage element 114 and engagement of the linkage element 114 with the respective pins 104 and 100 of the synchro drive pistons 68 and 82.

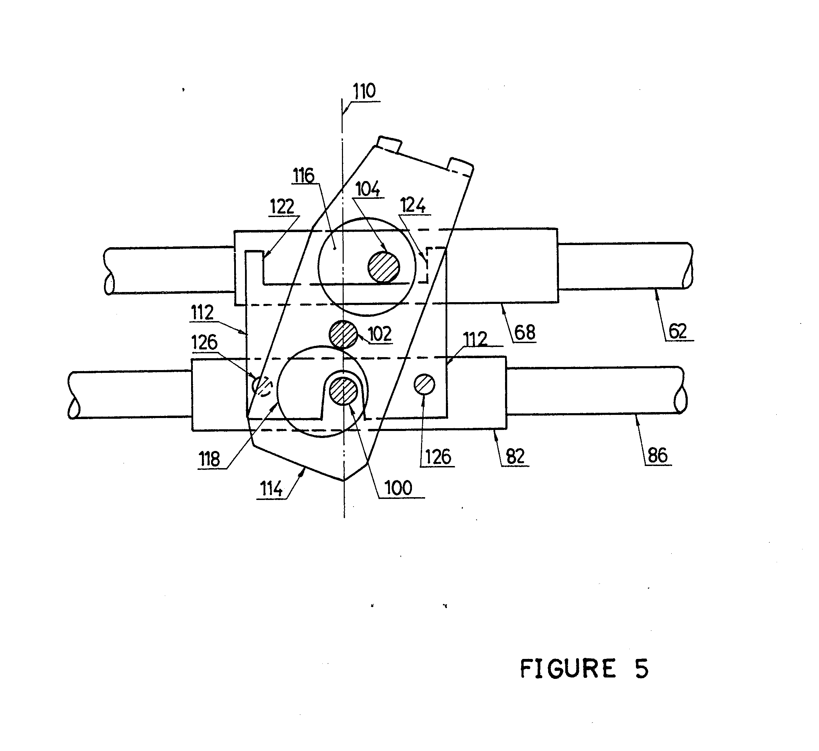

The operation of the apparatus of Fig. 4 will be explained hereinbelow by reference to different operative orientations of this apparatus. Fig. 5 illustrates the apparatus of Fig. 4 arranged for first gear operation wherein synchro drive piston 68 is moved to the right, as described hereinabove. Pin 104, fixedly attached to synchro drive piston 68 also moves to the right and engages the edge of aperture 116, causing rotation of the second mechanical linkage 114 about its pivot at pin 102 in a clockwise direction as seen in Fig. 5. This rotation does not result in motion of pin 100 to the left, due to the lost motion provided in a predetermined amount according to the configuration, size and orientation of apertures 116 and 118. Further, the movement of synchro drive piston 68 to the right does not cause pin 104 to engage surface 124 of first mechanical linkage 112 due to the lost motion provided in a predetermined amount according to the configuration, size and orientation of surface 124.

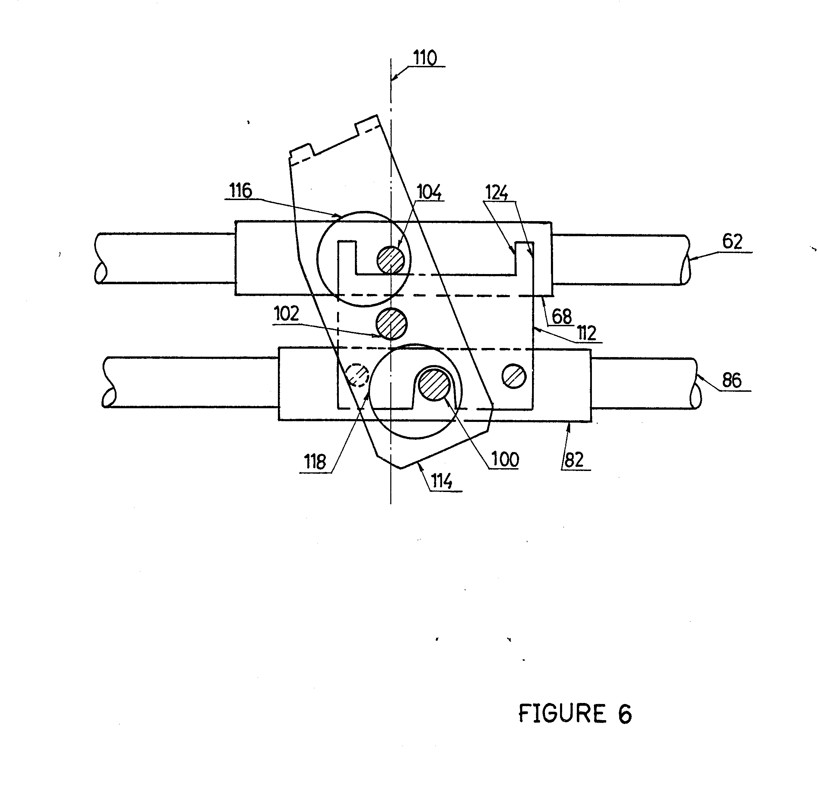

Reference is now made to Fig. 6 which illustrates the apparatus of Fig. 4 arranged for second gear operation. As noted above, second gear operation is attained by moving synchro drive piston 82 to the right. It is appreciated that movement of synchro drive piston 82 to the right forces pin 100 to engage aperture 118 of second mechanical linkage 114, thus causing second mechanical linkage 114 to rotate in the clockwise direction about pivot 102. The clockwise rotation of second mechanical linkage 114 causes aperture 116 to engage pin 104, thereby forcing synchro drive piston 68 to the left and disengaging the first gear synchro 40.

The lost motion between pin 100 and aperture 118, and between pin 104 and aperture 116 is such that the first gear synchro 40 disengages gear 32 from shaft 31 at the last possible instant before synchro drive piston 82 forces synchro 30 to engage the second gear 26 to shaft 18. Hence, the gearbox 20 remains in first gear as long as it possibly can before the second gear is engaged, thereby minimizing the time between gear shifts.

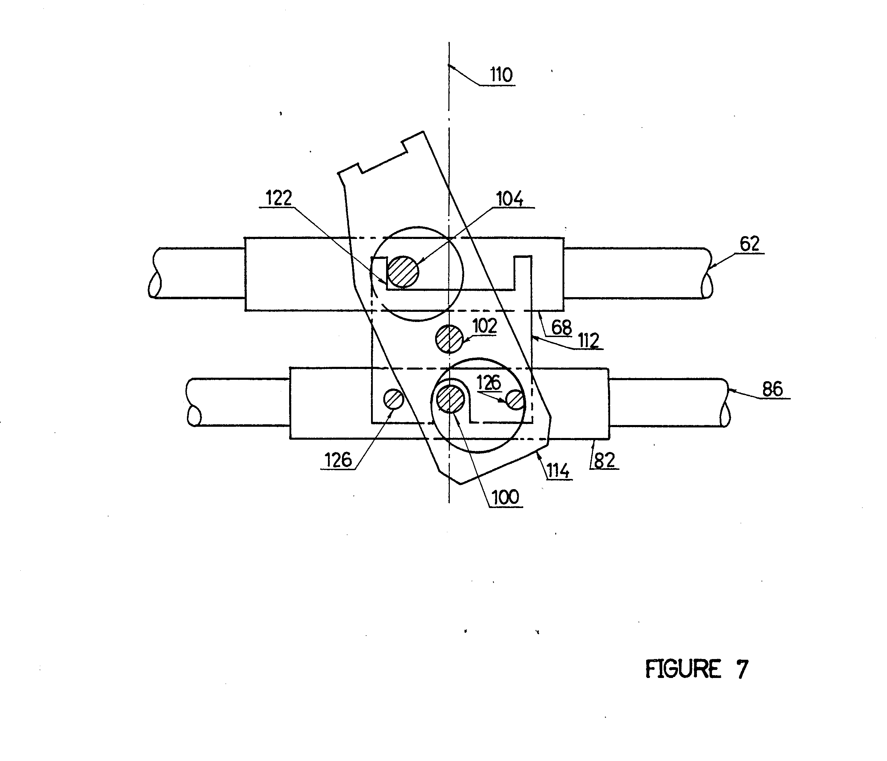

Reference is now made to Fig. 7 which illustrates the apparatus of Fig. 4 arranged for third gear operation. As noted above, third gear operation is attained by moving synchro drive piston 68 to the left. It is appreciated that movement of synchro drive piston 68 to the left forces pin 104 to engage surface 122 of first mechanical linkage 112, thus causing first mechanical linkage 112 to move to the left as well. The leftward motion of first mechanical linkage 112 causes forces synchro drive piston 82 to the left thereby causing synchro 30 to disengage gear 26 from shaft 18.

The lost motion between pin 104 and surface 122 is such that the second gear synchro 30 disengages gear 26 from shaft 18 at the last possible instant before synchro drive piston 68 forces synchro 40 to engage the third gear 34 to shaft 31. Hence, the gearbox 20 remains in second gear as long as it possibly can before the third gear is engaged, thereby minimizing the time between gear shifts.

The shift from third gear to fourth gear is made in a manner which is substantially the same as the shift from first gear to second gear describe hereinabove.

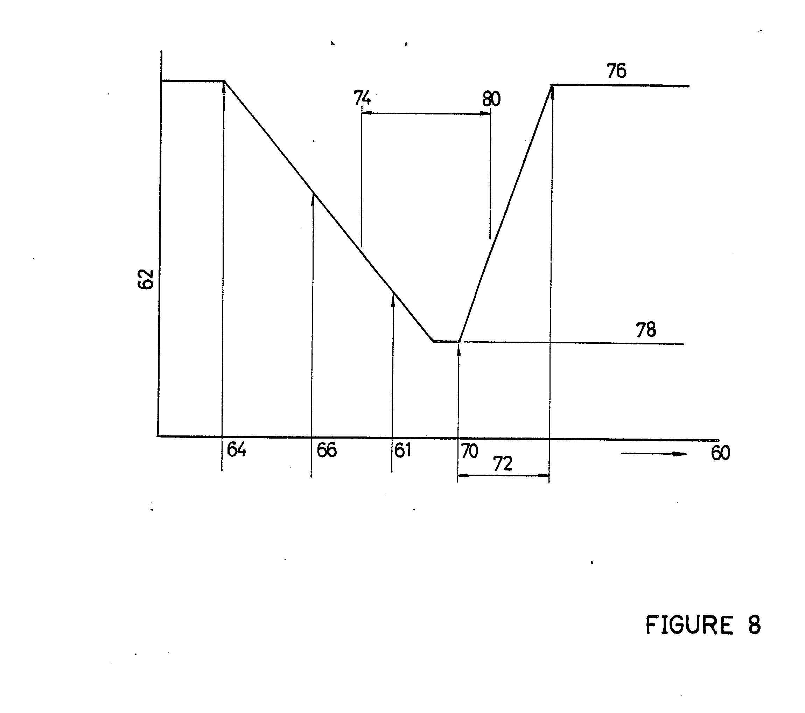

Reference is now made to Fig. 8, which describes the timing of the engagement of clutch 16 during the gear change process. Axis 62 describes the degree of engagement of clutch 16. Level 76 indicates that clutch 16 is fully engaged and can transmit all the torque produced by engine 10. Level 78 indicates that the clutch 16 is completely disengaged and can transmit no torque. Axis 60 indicates the progress of time as a gear shift proceeds.

At time 64, a decision is made by the control apparatus 50 to shift from first to second gear and a command to begin disengagement of clutch 16 is issued by control apparatus 50. Note that at time 64 the apparatus is in the configuration shown in Fig. 5. While the clutch actuator 17 is disengaging the clutch 16, torque is still transmitted by the clutch 16 and vehicle performance is not affected. At a later predetermined time 66, a command is issued by the control apparatus 50 to synchro drive piston 82 to begin movement towards the left to engage second gear 26 to shaft 18. while the synchro drive piston 82 is moving, the clutch 16 can still transmit torque. At time 61, the synchro drive piston 82 has caused second mechanical linkage 114 to rotate counterclockwise, thereby forcing synchro drive piston 68 to the left and disengaging first gear 32.

Note that during the time interval from 64 to 74, the first gear is still engaged to transmission shaft 31 and the clutch 16 is still transmitting torque. At time 74, the clutch torque capacity has decreased to the point wherein all the torque produced by the engine 10 cannot be transmitted and interruption of power flow begins. Hence, normal operation of the vehicle continues well into the gear shift operation and the interval of interruption of power flow is minimized.

At time 70, the torque capacity of clutch 16 has been reduced to the zero level 78 and the synchro drive piston 82 has engaged the second gear 26 to the transmission shaft 18. the control apparatus 50 then issues a command to clutch actuator 17 to begin reengagement of clutch 16. At time 80 the clutch 16 is engaged sufficiently to resume transmission of drive power from the engine 10.

The net effect is the the interruption of power has been reduced to the period from time 74 until time 80, resulting in a very smooth shift and barely perceptible interruption of power flow.

It will be appreciated that the shifts from second to third gear operation, and from third to fourth gear operation are accomplished in substantially the same manner. It will also be apreciatd that downshifts from fourth to third gear operation, from third to second gear operation, and from second to first gear operation are accomplished in substantially the same manner.

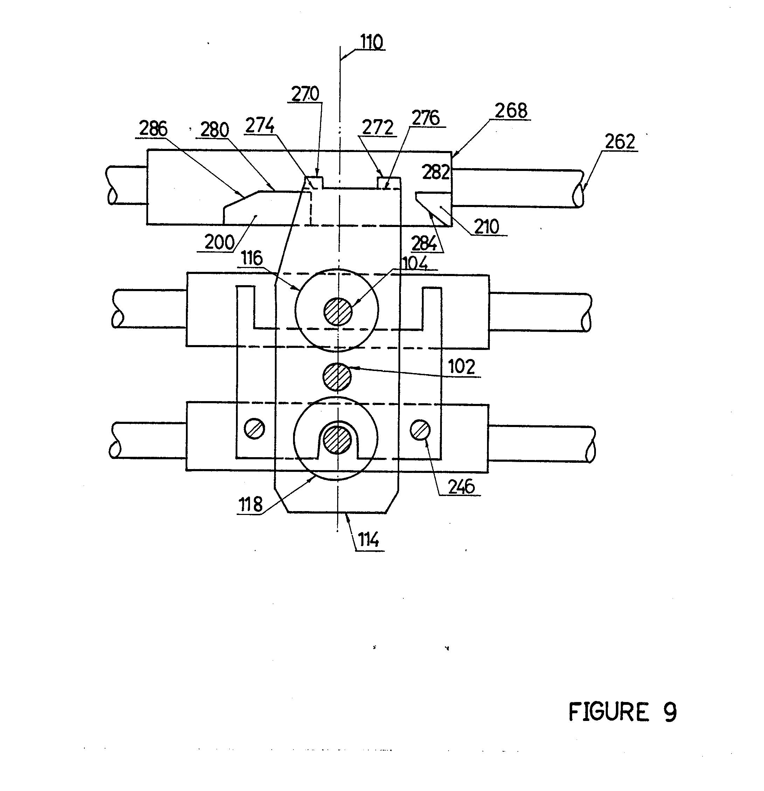

Reference is now made to Fig. 9 which illustrates drive piston 268. Drive piston 268 is a piston and moving housing arrangement substantially the same as synchro drive piston 68 or 82. The drive piston 268 moves axially along shaft 262, which is rigidly attached to the gear box housing 20. When drive piston 268 moves to the left as seen on Fig. 9, a fork arrangement (not shown) is used to engage a reverse gear (not shown) so that the vehicle can operate in the reverse direction. The arrangement of the reverse gear and its activating fork is substantially the same as that of a conventional mechanical gearbox.

Mounted on drive piston 268 is an extension 200 with surfaces 280 and 286. Also mounted on drive piston 268 is an extension 210 with surfaces 282 and 284. The ends of second mechanical linkage 114 are bent in the downward direction as seen from Fig. 9, forming extending fingers 270 and 272, with inside surfaces 274 and 276. The function of extensions 200 and 210 and extending fingers 270 and 272 will be explained hereinbelow.

When the gear box is in the neutral position, second mechanical linkage 114 is aligned with imaginary center line 110 as described hereinabove with reference to Fig. 4. When piston drive 268 moves to the right, extension elements 200 and 210 will pass under second mechanical linkage 114, and under inside surfaces 274 and 276, thereby allowing the reverse gear to be engaged.

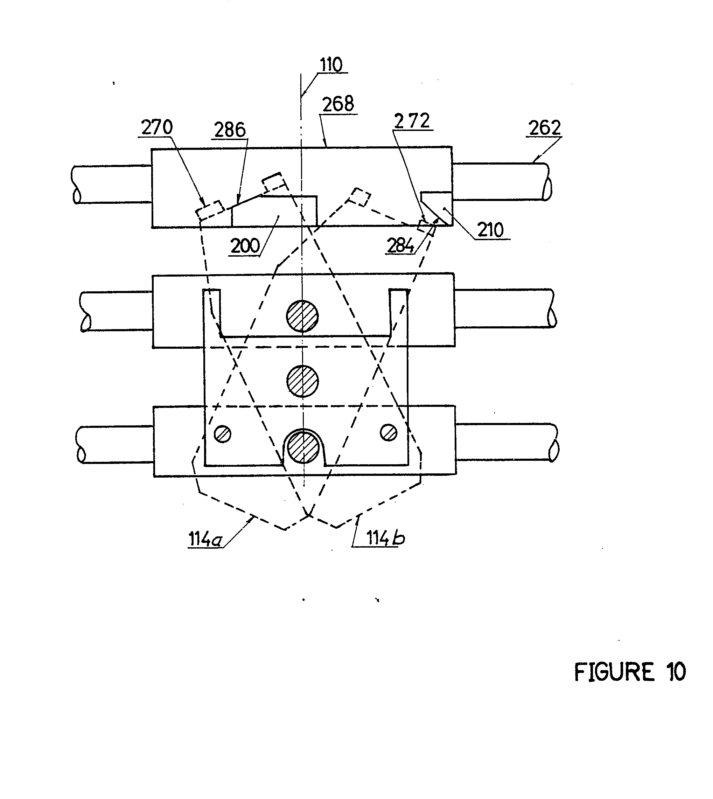

Referring now to Fig. 10, there is shown, as 114a in phantom lines, the position of second mechanical linkage 114 when the gear box is arranged for first gear operation or for fourth gear operation. If an inadvertent signal is provided by control apparatus 50 for the drive piston 262 to move to the left to engage reverse gear, the surface 284 of extension 210 would contact extending finger 272, thereby preventing the reverse gear from being engaged while the gear box is in first or fourth gears.

When the gear box is arranged for operation in second ot third gear, the position of second mechanical linkage 114 is indicated by 114b. If an inadvertent signal is provided by control apparatus 50 to engage reverse gear, extension 200 of drive piston 268 would contact extending finger 270, thereby preventing the reverse gear from being engaged when the gear box is in second or third gears.

The function of extension elements 200 and 210, and extending fingers 270 and 272 therefore, is to provide a mechanical interlock which allows the reverse gear to be engaged only if the gear box is arranged for operation in neutral and to prevent engagement of the reverse gear when the gear box is in any operative gear even if a command is inadvertently provided to enter reverse gear, thereby preventing damage to the gear box.

12

The various features of the invention have been described hereinabove in detail with reference to diagrams illustrating the construction and operation of specific preferred embodiments of the invention. It is to be clearly understood that many other embodiments of the invention may also be constructed and operated within the scope of the invention. Therefore, the invention is limited only by the claims which follow:

The features disclosed in the foregoing description, in the following claims and/or in the accompanying drawings may, both separately and in any combination thereof, be material for realising the invention in diverse forms thereof.

0150583

13

CLAIMS

1. A vehicle drive system comprising:

an engine;

transmission means interposed between said engine and the drive wheels of a vehicle, said transmission means comprising an input shaft, an output shaft and a plurality of selectable ratio gear couplings between said input shaft and said output shaft;

a clutch interposed between said engine and said input shaft, said clutch being operable to selectively engage and disengage said engine from said input shaft;

a clutch actuator;

first and second synchromesh mechanisms;

first and second mechanical linkage elements;

control means operative to position said synchromesh mechanisms such that the shifts between said selectable ratio gear couplings are carried out in a minimum amount of time.

2. A vehicle drive system according to claim 1 wherein said transmission means comprises a plurality of gears and wherein said synchromesh mechanisms are operative to selectively engage said gears to said input and said output shaft.

3. A vehicle drive system according to claim 2 wherein said first and second mechanical linkage elements comprise lost motion such that the previously operable gear ratio is disengaged mechanically at the last possible moment before engagement of the next operable gear ratio.

4. A vehicle drive system according to claim 3 wherein said selectable gear ratios comprise a first gear ratio, a second gear ratio, a third gear ratio, a fourth gear ratio and wherein said first and said third selectable gear

14

ratios are activated by said first synchromesh mechanism and wherein said second and said fourth selectable gear ratios are activated by said second synchromesh mechanism.

5. A vehicle drive system according to claim 4 wherein a mechanical interlock prevents a reverse gear from being engaged when said transmission is operative in any of said selectable gear ratios.

0150583

FIGURE 1

FIGURE 2

FIGURE 3

FIGURE 4

FIGURE 5

FIGURE 6

0150583

62

86

68 112

82

110

104

102

126

100

114

122

126

FIGURE 7

0150583

FIGURE 8

FIGURE 9

0150583

FIGURE 10